# EUROPEAN PATENT APPLICATION

(11) **EP 4 810 580 A1**
(43) Date of publication of application: **23.09.2026**
(21) Application number: 24902401.9
(22) Date of filing: 30.10.2024
(51) Int. Cl.: C09J 157/02

(54) **FLEXIBLE BINDER AND USE THEREOF IN SECONDARY BATTERIES**

(30) Priority: 12.12.2023 CN 202311700495
(71) Applicant: Meishan Indigo Technology Co., Ltd., Meishan, Sichuan 620861 (CN)
(72) Inventor: CAI, Yu, Meishan, Sichuan 620861 (CN); WANG, Lu, Meishan, Sichuan 620861 (CN); LI, Rengui, Meishan, Sichuan 620861 (CN); ZHANG, Junru, Meishan, Sichuan 620861 (CN)
(74) Representative: MacLachlan IP Limited
(86) International application number: PCT/CN2024/128371
(87) International publication number: WO 2025/123977

(57) **Abstract**

The present invention relates to a flexible binder and the use thereof in secondary batteries, and belongs to the technical field of battery binders. The present invention aims solving the technical problem of providing a flexible binder having good solubility in NMP. The binder comprises a modified resin, the modified resin being formed by polymerizing a thermoplastic resin and modification monomers, the modification monomers comprising a functional monomer and a dispersing monomer. The modified resin comprises, in parts by weight, 20-50 parts of the thermoplastic resin, 5-25 parts of the functional monomer and 40-60 parts of the dispersing monomer. The binder has room-temperature solubility in NMP solvent, can form a homogeneous solution in the NMP solvent, and has excellent flexibility and electrolyte resistance and excellent binding force to metal materials. Therefore, the flexible binder can be applied in the fields of edge coating protective binders, conductive dispersion binders and positive and negative electrode binders of lithium ion batteries, can be used independently, and also can be used together with other binders. The flexible binder is fluorine-free, and has outstanding advantages in price and environmental protection, and thus can replace traditional fluorine resins to be applied in lithium ion batteries.

## Description

### CROSS-REFERENCE TO RELATED APPLICATIONS

The present application claims the benefit and priority of Chinese Patent Application No. 2023117004954 filed on December 12, 2023, which is hereby incorporated by reference in its entirety for all purposes.

### FIELD OF THE INVENTION

The present invention relates to a flexible binder and use thereof in a secondary battery, belonging to the technical field of battery binders.

### BACKGROUND OF THE INVENTION

Lithium battery binders are polymer materials that bond positive/negative electrode active materials, conductive agents, and other powders to a current collector (copper or aluminum foil). Their function is to bind several materials, stabilize the electrode structure, and ensure electronic contact between the electrode active material and the conductive agent as well as between the active material and the current collector during battery reaction. Typically, the amount of binder accounts for 2% to 5% of the positive/negative electrode active materials.

With deeper understanding of lithium batteries, current technologies can meet the basic requirements for binders. The main problem to be solved is the contradiction among requirements in slurry and electrode processing, electrolyte resistance, and battery performance. For example, PVDF is a traditional and classic positive electrode binder material with good overall performance. However, with the continuous development of positive electrode materials and increasing requirements for battery performance, higher demands are placed on positive electrode binders. When PVDF is used as a binder for high-nickel positive electrode materials, problems such as slurry gelation and elimination reactions of PVDF molecules due to the presence of alkali occur during production.

To address the above problems, thermoplastic elastomers, rubbers, and polyesters have become optional materials for positive electrode binders. However, these three types of materials currently have disadvantages such as insolubility in NMP, poor electrolyte swelling resistance, or poor electrochemical stability.

Thermoplastic elastomers have high flexibility and initial tack, which can improve the flexibility of the coating and electrode, as well as gelation problems during slurry preparation, meeting electrode processing requirements. However, they have problems of insolubility in NMP, poor electrolyte resistance, or poor electrochemical oxidation resistance. Therefore, research on binders is scarce. Chinese Patent Publication No. CN1437623A discloses a polyurethane hot-melt adhesive composition containing an acrylic copolymer and a thermoplastic resin, and Chinese Patent Publication No. CN114846107A discloses a polyurethane hot-melt adhesive composition and a preparation method thereof, both using thermoplastic materials as hot-melt adhesives.

Currently, all supporting systems in the lithium battery industry use N-methyl-2-pyrrolidone (NMP) as a solvent. Therefore, binders used must have good solubility and fluidity under NMP solvent conditions to meet industrial application requirements. Thus, there is an urgent need to study binders that are well soluble in NMP at room temperature.

### BRIEF SUMMARY OF THE INVENTION

The technical problem solved by the present invention is to provide a flexible binder having good solubility in NMP.

The flexible binder of the present invention comprises a modified resin, wherein the modified resin is obtained by polymerizing a thermoplastic resin and modifying monomers, the modifying monomers comprising a functional monomer and a dispersing monomer, and in parts by weight: 20 to 50 parts of the thermoplastic resin, 5 to 25 parts of the functional monomer, and 40 to 60 parts of the dispersing monomer;
and the modified resin, after dissolution in NMP at room temperature, has a concentration ≥ 2 wt%;
the functional monomer comprises at least one selected from the group consisting of an unsaturated monomer having a carboxyl (anhydride) group, an unsaturated monomer having a sulfonic acid group, an unsaturated monomer having an amino group, and an unsaturated monomer having a hydroxyl group; the dispersing monomer comprises an acrylate monomer;
the thermoplastic resin is a resin that dissolves in NMP at a temperature ≤ 100°C.

In one embodiment of the present invention, the thermoplastic resin comprises at least one selected from the group consisting of an ethylene- acrylic acid copolymer having an acrylic acid monomer content ≥ 18%, an ethylene - vinyl acetate copolymer having a vinyl acetate monomer content ≥ 33%, an ethylene- vinyl acetate- carbonate copolymer, and an ethylene- vinyl alcohol copolymer.

In some embodiments of the present invention, the unsaturated monomer having a carboxyl (anhydride) group comprises at least one selected from the group consisting of (meth)acrylic acid, undecenoic acid, octadecenoic acid, crotonic acid, itaconic acid, fumaric acid, maleic anhydride, 2- ethylacrylic acid, isocrotonic acid, α- acetoxyacrylic acid, β - trans - aryloxyacrylic acid, α - chloro - β - E - methoxyacrylic acid, β - diaminoacrylic acid, maleic anhydride, acrylic anhydride, methylmaleic anhydride, dimethylmaleic anhydride, methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleate.

In some embodiments of the present invention, the unsaturated monomer having a sulfonic acid group comprises at least one selected from the group consisting of 2 - acrylamido - 2 - methylpropanesulfonic acid, allyloxyhydroxypropylsulfonic acid, vinylsulfonic acid, vinylsulfonate, 2 - acrylamido - 2 - methylpropanesulfonic acid, allylsulfonic acid, and methallylsulfonic acid.

In some embodiments of the present invention, the unsaturated monomer having an amino group comprises at least one selected from the group consisting of dimethylaminoethyl acrylate, diethylaminoethyl methacrylate, 2 - (dimethylamino)ethyl methacrylate, and N- (2- aminoethyl)acrylamide.

In some embodiments of the present invention, the unsaturated monomer having a hydroxyl group comprises at least one selected from the group consisting of hydroxyethyl acrylate, hydroxypropyl acrylate, hydroxybutyl acrylate, and hydroxyethyl caprolactone acrylate.

In some embodiments of the present invention, the dispersing monomer comprises at least one selected from the group consisting of methyl (meth)acrylate, ethyl (meth)acrylate, butyl (meth)acrylate, isooctyl (meth)acrylate, glycidyl (meth)acrylate, lauryl acrylate, stearyl acrylate, phenoxyethyl (meth)acrylate, caprolactone acrylate, tetrahydrofurfuryl (meth)acrylate, ethoxylated tetrahydrofurfuryl acrylate, 2- methoxyethyl (meth)acrylate, 2 - ethoxyethyl acrylate, glycidyl methacrylate, and allyl glycidyl ether.

In a preferred embodiment of the present invention, the thermoplastic resin is present in an amount of 25 to 45 parts.

In a specific embodiment of the present invention, the thermoplastic resin has a molecular weight of 50,000 to 400,000.

In one embodiment of the present invention, the modifying monomers further comprise a crosslinking monomer.

Preferably, the crosslinking monomer is present in an amount not exceeding 1.5% by weight of the total modified resin.

In a specific embodiment of the present invention, the crosslinking monomer comprises at least one selected from the group consisting of ethylene glycol dimethacrylate, ethylene glycol diacrylate, allyl methacrylate, N,N - methylenebisacrylamide, and divinylbenzene.

In a preferred embodiment of the present invention, the modifying monomers consist of a functional monomer, a dispersing monomer, and a crosslinking monomer.

In a specific embodiment of the present invention, in parts by weight: 20 to 50 parts of thermoplastic resin, 5 to 25 parts of functional monomer, 40 to 60 parts of dispersing monomer, and 0.01 to 1.5 parts of crosslinking monomer.

The present invention also provides the use of the flexible binder according to the present invention in a secondary battery.

The flexible binder of the present invention can form a homogeneous solution in NMP solvent, and has excellent flexibility, electrolyte resistance, and adhesion to metal materials.

As used herein, "room temperature" refers to 25°C.

Compared with the prior art, the present invention has the following beneficial effects:
The present invention modifies a thermoplastic resin through specific graft copolymerization to obtain a modified resin that can be well dissolved in NMP at room temperature, improves the tolerance of the binder to carbonate - based electrolytes, and enhances the adhesion of the material to a foil. The binder has room- temperature solubility in NMP solvent, can form a homogeneous solution in NMP solvent, and has excellent flexibility, electrolyte resistance, and adhesion to metal materials. It can be used in the fields of edge coating protective glue, conductive dispersion glue, and positive/negative electrode binders for lithium- ion batteries, either alone or in combination with other binders. The compatible binders include, but are not limited to, ethylene - vinylidene fluoride resin, ethylene- vinylidene fluoride- propylene resin, polyacrylonitrile and derivatives thereof, etc.

The flexible binder of the present invention has excellent adhesion and stable electrochemical properties, is fluorine- free, and has outstanding cost and environmental advantages, thus can replace traditional fluorine - based resins for use in lithium - ion batteries.

### DETAILED DESCRIPTION OF THE INVENTION

The flexible binder of the present invention comprises a modified resin, wherein the modified resin is obtained by polymerizing a thermoplastic resin and modifying monomers, the modifying monomers comprising a functional monomer and a dispersing monomer, and in parts by weight: 20 to 50 parts of the thermoplastic resin, 5 to 25 parts of the functional monomer, and 40 to 60 parts of the dispersing monomer;
and the modified resin, after dissolution in NMP at room temperature, has a concentration ≥ 2 wt%;
the functional monomer comprises at least one selected from the group consisting of an unsaturated monomer having a carboxyl (anhydride) group, an unsaturated monomer having a sulfonic acid group, an unsaturated monomer having an amino group, and an unsaturated monomer having a hydroxyl group; the dispersing monomer comprises an acrylate monomer;
the thermoplastic resin is a resin that dissolves in NMP at a temperature ≤ 100°C.

The present invention graft- modifies a thermoplastic resin to impart room- temperature solubility in NMP solvent, while improving the high- temperature tolerance of the material in carbonate- based electrolytes and the adhesion to a metal foil. It can be used in the fields of edge coating protective glue, conductive dispersion glue, and positive/negative electrode binders for lithium- ion batteries, either alone or in combination with other binders.

Any thermoplastic resin conventionally used in the art for battery binders that is heat- soluble in NMP is suitable for the present invention. In one embodiment of the present invention, the thermoplastic resin comprises at least one selected from the group consisting of an ethylene- acrylic acid copolymer having an acrylic acid monomer content ≥ 18%, an ethylene- vinyl acetate copolymer having a vinyl acetate monomer content ≥ 33%, an ethylene- vinyl acetate- carbonate copolymer, and an ethylene- vinyl alcohol copolymer.

The functional monomer can improve the adhesion of the resin to metal foils and the electrolyte resistance of the resin. In some embodiments of the present invention, the unsaturated monomer having a carboxyl (anhydride) group comprises at least one selected from the group consisting of (meth)acrylic acid, undecenoic acid, octadecenoic acid, crotonic acid, itaconic acid, fumaric acid, maleic anhydride, 2- ethylacrylic acid, isocrotonic acid, α- acetoxyacrylic acid, β- trans- aryloxyacrylic acid, α- chloro- β- E- methoxyacrylic acid, β- diaminoacrylic acid, maleic anhydride, acrylic anhydride, methylmaleic anhydride, dimethylmaleic anhydride, methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleate.

In some embodiments of the present invention, the unsaturated monomer having a sulfonic acid group comprises at least one selected from the group consisting of 2- acrylamido- 2- methylpropanesulfonic acid, allyloxyhydroxypropylsulfonic acid, vinylsulfonic acid, vinylsulfonate, 2- acrylamido- 2- methylpropanesulfonic acid, allylsulfonic acid, and methallylsulfonic acid.

In some embodiments of the present invention, the unsaturated monomer having an amino group comprises at least one selected from the group consisting of dimethylaminoethyl acrylate, diethylaminoethyl methacrylate, 2- (dimethylamino)ethyl methacrylate, and N- (2- aminoethyl)acrylamide.

In some embodiments of the present invention, the unsaturated monomer having a hydroxyl group comprises at least one selected from the group consisting of hydroxyethyl acrylate, hydroxypropyl acrylate, hydroxybutyl acrylate, and hydroxyethyl caprolactone acrylate.

The dispersing monomer can improve the solubility and dispersibility of the resin in NMP. In some embodiments of the present invention, the dispersing monomer comprises at least one selected from the group consisting of methyl (meth)acrylate, ethyl (meth)acrylate, butyl (meth)acrylate, isooctyl (meth)acrylate, glycidyl (meth)acrylate, lauryl acrylate, stearyl acrylate, phenoxyethyl (meth)acrylate, caprolactone acrylate, tetrahydrofurfuryl (meth)acrylate, ethoxylated tetrahydrofurfuryl acrylate, 2- methoxyethyl (meth)acrylate, 2- ethoxyethyl acrylate, glycidyl methacrylate, and allyl glycidyl ether.

In a preferred embodiment of the present invention, the thermoplastic resin is present in an amount of 25 to 45 parts.

In a specific embodiment of the present invention, the thermoplastic resin has a molecular weight of 50,000 to 400,000.

In one embodiment of the present invention, the modifying monomers further comprise a crosslinking monomer.

Preferably, the crosslinking monomer is present in an amount not exceeding 1.5% by weight of the total modified resin.

Crosslinking monomers can increase intermolecular cohesion and polymer molecular weight through crosslinking, thereby enhancing sustained adhesion. In a specific embodiment of the present invention, the crosslinking monomer comprises at least one selected from the group consisting of hydroxyacrylamide, ethylene glycol dimethacrylate, ethylene glycol diacrylate, allyl methacrylate, N,N- methylenebisacrylamide, and divinylbenzene.

In a preferred embodiment of the present invention, the modifying monomers consist of a functional monomer, a dispersing monomer, and a crosslinking monomer.

In a specific embodiment of the present invention, in parts by weight: 20 to 50 parts of thermoplastic resin, 5 to 25 parts of functional monomer, 40 to 60 parts of dispersing monomer, and 0.01 to 1.5 parts of crosslinking monomer.

The modified resin of the present invention can be obtained by conventional graft copolymerization methods in the art.

In one embodiment of the present invention, solution polymerization is used. The thermoplastic resin is dissolved in NMP solvent at high temperature, and under certain reaction conditions, the polymer is modified by solution grafting to obtain an NMP solution, which is applied in the field of lithium battery binders.

The present invention also provides the use of the flexible binder according to the present invention in a secondary battery. The flexible binder of the present invention can form a homogeneous solution in NMP solvent, and has excellent flexibility, electrolyte resistance, and adhesion to metal materials.

In a specific embodiment, the secondary battery is a lithium- ion battery.

As used herein, "room temperature" refers to 25°C.

The present invention is further described below with reference to examples. However, the present invention is not limited to the scope of these examples. Performance tests of the products in the examples were carried out using the following methods:

### (1) Solubility Test

The test sample was placed in a beaker with magnetic stirring, NMP was added (concentration ≥ 2%), and the mixture was stirred at 25°C for 24 hours. The dissolution state of the test sample in NMP solvent was observed.

### (2) Electrolyte Swelling Degree Test (70°C/24h)

In the present invention, the electrolyte swelling degree refers to the degree of swelling of the part of a modified rubber film that does not dissolve in the electrolyte after immersion in a carbonate- based electrolyte salt solution at 70°C for 24 hours. Specifically, the electrolyte swelling degree of the modified rubber can be calculated using the following method: An NMP solution containing the modified resin was prepared, and the dispersion was completely dried in a forced air oven at 110°C to form a film with a thickness of 0.2 to 0.5 mm. The film was cut into 2.5 mm squares, and about 1 g was accurately weighed. The mass of the cut film pieces was designated as WO. The film pieces were immersed in 100 g of an electrolyte (Shanshan 12663) at 70°C for 24 hours. Then, the film pieces were removed from the electrolyte, the excess electrolyte on the surface was wiped off with a lint- free cloth, and the mass of the film pieces was weighed as W1. The mass change was calculated according to the following formula as the electrolyte swelling degree. $Swelling degree % = \left\{\left(W1-W0\right)/W0\right\} \times 100$

### (3) DMC Solvent Dissolution Test (70°C/24h)

The sample was prepared as above. The modified rubber film was dried and weighed as M0, then immersed in DMC solvent, sealed, and stored at 70°C for 24 hours. It was then taken out, the excess solvent on the surface was wiped off with a lint- free cloth, and it was dried in a forced air oven at 110°C for 5 hours. The weight of the film was weighed as M1. $Dissolution % = \left\{\left(M0-M1\right)/M0\right\} \times 100$

### (4) Preparation of Lithium Cobalt Oxide (LCO) Positive Electrode Sheet and Measurement of Peeling Force Between Coating and Aluminum Foil

Positive electrode slurry was prepared according to the following formula and process. The slurry formula is shown in Table 1, and the mixing process is shown in Table 2.

**Table 1**

| LiCoO₂ | SP Conductive Agent | Binder 1 - PVDF | Binder 2 - Modified Resin | Solid Content |
|---|---|---|---|---|
| 97% | 1% | 2.0% | 2.0% | 75~85% |

**Table 2**

| Step | Operation |
|---|---|
| 1 | Dissolve Binder 1 for 3 hours |
| 2 | Add dry powders, mix for 5 hours (kneading) |
| 3 | Slowly stir and cool for 2 hours to obtain the final slurry |

Electrode preparation: The positive electrode slurry was coated onto aluminum foil to produce an electrode sheet with a single- sided areal density of 240 g/m² and a width of 40 mm. The 180° coating peeling force was tested.

### Example 1

In a 500 mL four- necked flask, NMP solvent was added. Under stirring, 20 parts of ethylene- vinyl acetate resin (Mitsui 40W, Japan) particles were added and dissolved at 70°C to form a colorless transparent solution. The temperature was then lowered to 60- 70°C for reaction. A peroxide or azo initiator was added, followed by a one- time addition of 25 parts of acrylic acid, 55 parts of lauryl acrylate, and 0.2 parts of allyl methacrylate. The peroxide or azo initiator was supplemented every 3 hours, and the reaction was maintained at 70°C for 15 hours to obtain a flexible binder.

### Example 2

In a 500 mL four- necked flask, NMP solvent was added. Under stirring, 30 parts of ethylene- vinyl acetate resin (UE3330, Taiwan Polymer) particles were added and dissolved at 70°C to form a colorless transparent solution. The temperature was then lowered to 60- 70°C for reaction. A peroxide or azo initiator was added, followed by a one- time addition of 12 parts of methacrylic acid, 58 parts of isooctyl acrylate, and 0.5 parts of ethylene glycol dimethacrylate. The peroxide or azo initiator was supplemented every 3 hours, and the reaction was maintained at 70°C for 15 hours to obtain a flexible binder.

### Example 3

In a 500 mL four- necked flask, NMP solvent was added. Under stirring, 40 parts of ethylene- vinyl acetate resin (Mitsui 40W, Japan) particles (molecular weight 200,000) were added and dissolved at 70°C to form a colorless transparent solution. The temperature was then lowered to 60- 70°C for reaction. A peroxide or azo initiator was added, followed by a one- time addition of 20 parts of N- (2- aminoethyl)acrylamide, 40 parts of isobornyl acrylate, and 1.0 parts of allyl methacrylate. The peroxide or azo initiator was supplemented every 3 hours, and the reaction was maintained at 70°C for 15 hours to obtain a flexible binder.

### Example 4

In a 500 mL four- necked flask, NMP solvent was added. Under stirring, 40 parts of ethylene- acrylic acid resin (Dow SK 1420) particles were added and dissolved at 70°C to form a colorless transparent solution. The temperature was then lowered to 60- 70°C for reaction. A peroxide or azo initiator was added, followed by a one- time addition of 15 parts of acrylic acid, 5 parts of allylsulfonic acid, 40 parts of glycidyl acrylate, and 0.05 parts of allyl methacrylate. The peroxide or azo initiator was supplemented every 3 hours, and the reaction was maintained at 70°C for 15 hours to obtain a flexible binder.

### Example 5

In a 500 mL four- necked flask, NMP solvent was added. Under stirring, 40 parts of ethylene- acrylic acid resin (Dow SK 1420) particles were added and dissolved at 70°C to form a colorless transparent solution. The temperature was then lowered to 60- 70°C for reaction. A peroxide or azo initiator was added, followed by a one- time addition of 5 parts of methacrylic acid, 55 parts of tetrahydrofurfuryl acrylate, and 0.1 parts of N,N- methylenebisacrylamide. The peroxide or azo initiator was supplemented every 3 hours, and the reaction was maintained at 70°C for 15 hours to obtain a flexible binder.

### Example 6

In a 500 mL four- necked flask, NMP solvent was added. Under stirring, 30 parts of ethylene- acrylic acid resin (Dow SK 1420) particles were added and dissolved at 70°C to form a colorless transparent solution. The temperature was then lowered to 60- 70°C for reaction. A peroxide or azo initiator was added, followed by a one- time addition of 10 parts of itaconic acid, 60 parts of allyl glycidyl ether, and 0.2 parts of allyl methacrylate. The peroxide or azo initiator was supplemented every 3 hours, and the reaction was maintained at 70°C for 15 hours to obtain a flexible binder.

### Example 7

In a 500 mL four- necked flask, NMP solvent was added. Under stirring, 35 parts of ethylene- acrylic acid resin (Dow SK 1420) particles were added and dissolved at 70°C to form a colorless transparent solution. The temperature was then lowered to 60- 70°C for reaction. A peroxide or azo initiator was added, followed by a one- time addition of 20 parts of methacrylic acid, 45 parts of isooctyl acrylate, and 0.1 parts of divinylbenzene. The peroxide or azo initiator was supplemented every 3 hours, and the reaction was maintained at 70°C for 15 hours to obtain a flexible binder.

### Example 8

In a 500 mL four- necked flask, NMP solvent was added. Under stirring, 25 parts of ethylene- acrylic acid resin (Dow SK 1420) particles were added and dissolved at 70°C to form a colorless transparent solution. The temperature was then lowered to 60- 70°C for reaction. A peroxide or azo initiator was added, followed by a one- time addition of 25 parts of allyloxyhydroxypropylsulfonic acid, 50 parts of tetrahydrofurfuryl methacrylate, and 0.1 parts of hydroxyacrylamide. The peroxide or azo initiator was supplemented every 3 hours, and the reaction was maintained at 70°C for 15 hours to obtain a flexible binder.

### Comparative Example 1

In a 500 mL four- necked flask, NMP solvent was added. Under stirring, 18 parts of ethylene- vinyl acetate resin (Mitsui 40W, Japan) particles were added and dissolved at 70°C to form a colorless transparent solution. The temperature was then lowered to 60- 70°C for reaction. A peroxide or azo initiator was added, followed by a one- time addition of 25 parts of acrylic acid, 57 parts of lauryl acrylate, and 0.2 parts of allyl methacrylate. The peroxide or azo initiator was supplemented every 3 hours, and the reaction was maintained at 70°C for 15 hours to obtain a flexible binder.

### Comparative Example 2

In a 500 mL four- necked flask, NMP solvent was added. Under stirring, 52 parts of ethylene- acrylic acid resin (Dow SK 1420) particles were added and dissolved at 70°C to form a colorless transparent solution. The temperature was then lowered to 60- 70°C for reaction. A peroxide or azo initiator was added, followed by a one- time addition of 15 parts of methacrylic acid, 23 parts of lauryl acrylate, and 0.1 parts of allyl methacrylate. The peroxide or azo initiator was supplemented every 3 hours, and the reaction was maintained at 70°C for 15 hours to obtain a flexible binder.

### Comparative Example 3

In a 500 mL four- necked flask, NMP solvent was added. Under stirring, 40 parts of ethylene- vinyl acetate resin (Mitsui 40W, Japan) particles were added and dissolved at 70°C to form a colorless transparent solution. The temperature was then lowered to 60- 70°C for reaction. A peroxide or azo initiator was added, followed by a one- time addition of 60 parts of isobornyl acrylate and 1.0 parts of allyl methacrylate. The peroxide or azo initiator was supplemented every 3 hours, and the reaction was maintained at 70°C for 15 hours to obtain a flexible binder.

### Comparative Example 4

In a 500 mL four- necked flask, NMP solvent was added. Under stirring, 40 parts of ethylene- vinyl acetate resin (Mitsui 40W, Japan) particles were added and dissolved at 70°C to form a colorless transparent solution. The temperature was then lowered to 60- 70°C for reaction. A peroxide or azo initiator was added, followed by a one- time addition of 60 parts of N- (2- aminoethyl)acrylamide and 1.0 parts of allyl methacrylate. The peroxide or azo initiator was supplemented every 3 hours, and the reaction was maintained at 70°C for 15 hours to obtain a flexible binder.

### Comparative Example 5

In a 500 mL four- necked flask, NMP solvent was added. Under stirring, 40 parts of ethylene- vinyl acetate resin (Mitsui 40W, Japan) particles were added and dissolved at 70°C to form a colorless transparent solution. The temperature was then lowered to 60- 70°C for reaction. A peroxide or azo initiator was added, followed by a one- time addition of 20 parts of N- (2- aminoethyl)acrylamide and 40 parts of isobornyl acrylate. The peroxide or azo initiator was supplemented every 3 hours, and the reaction was maintained at 70°C for 15 hours to obtain a flexible binder.

### Comparative Example 6

Unmodified resin EVA (Mitsui 40W, Japan).

### Comparative Example 7

Unmodified resin EAA (Dow SK 1420).

### Comparative Example 8

In a 500 mL four- necked flask, NMP solvent was added. Under stirring at a reaction temperature of 60- 70°C, a peroxide or azo initiator was added, followed by a one- time addition of 20 parts of N- (2- aminoethyl)acrylamide, 39 parts of isobornyl acrylate, and 1.0 parts of allyl methacrylate. The peroxide or azo initiator was supplemented every 3 hours, and the reaction was maintained at 70°C for 15 hours to obtain a copolymer. Then, at 70°C, 40 parts of ethylene- vinyl acetate resin (Mitsui 40W, Japan) particles were added, dissolved and blended, and cooled to room temperature to obtain a composite binder.

**Table 3**

| Material | NMP Solubility | High-Temperature Liquid Resistance, Immersion 60°C/3 days | | LCO Electrode State and Peeling Force | Remarks |
|---|---|---|---|---|---|
| | | Dissolution amount/DMC | Swelling degree/electrolyte | | |
| Example 1 | Homogeneous dispersion | 2.1% | 37.5% | 87 N/m | |
| Example 2 | Homogeneous dispersion | 4.3% | 42.6% | 65 N/m | |
| Example 3 | Homogeneous dispersion | 5.3% | 53.8% | 79 N/m | |
| Example 4 | Homogeneous dispersion | 3.9% | 32.1% | 115 N/m | |
| Example 5 | Homogeneous dispersion | 6.3% | 43.5% | 79 N/m | |
| Example 6 | Homogeneous dispersion | 3.8% | 35.1% | 88 N/m | |
| Example 7 | Homogeneous dispersion | 1.3% | 29.3% | 107 N/m | |
| Example 8 | Homogeneous solution | 2.5% | 33.4% | 68 N/m | |
| Comp. Ex. 1 | Homogeneous solution | 2.0% | 34.7% | 23 N/m | Too low adhesion, no application |
| | | | | | value |
| Comp. Ex. 2 | Jelly-like | / | / | / | Unable to disperse slurry, no application value |
| Comp. Ex. 3 | Jelly-like | Dissolves into turbid liquid | 150% | / | Unable to disperse slurry, no application value |
| Comp. Ex. 4 | Jelly-like | 1.53% | 25.2% | / | Unable to disperse slurry, no application value |
| Comp. Ex. 5 | Homogeneous dispersion | 10.1% | 67% | 57 N/m | Poor electrolyte resistance, no application value |
| Comp. Ex. 6 | Insoluble | / | / | / | Unable to disperse slurry, no application value |
| Comp. Ex. 7 | Insoluble | / | / | / | Unable to disperse slurry, no application value |
| Comp. Ex. 8 | Precipitates at room temperature | / | / | / | Unable to disperse slurry, no application value |

It can be seen that the flexible binder of the present invention can form a homogeneous solution in NMP solvent, and has excellent flexibility, electrolyte resistance, and adhesion to metal materials.

## Claims

1. A flexible binder, **characterized in that**: the binder comprises a modified resin, wherein the modified resin is obtained by polymerizing a thermoplastic resin and modifying monomers, the modifying monomers comprising a functional monomer and a dispersing monomer, and in parts by weight: 20 to 50 parts of the thermoplastic resin, 5 to 25 parts of the functional monomer, and 40 to 60 parts of the dispersing monomer;
and the modified resin, after dissolution in NMP at room temperature, has a concentration ≥ 2 wt%;
the functional monomer comprises at least one selected from the group consisting of an unsaturated monomer having a carboxyl (anhydride) group, an unsaturated monomer having a sulfonic acid group, an unsaturated monomer having an amino group, and an unsaturated monomer having a hydroxyl group; the dispersing monomer comprises an acrylate monomer;
the thermoplastic resin is a resin that dissolves in NMP at a temperature ≤ 100°C.

2. The flexible binder according to claim 1, **characterized in that**: the thermoplastic resin comprises at least one selected from the group consisting of an ethylene- acrylic acid copolymer having an acrylic acid monomer content ≥ 18%, an ethylene- vinyl acetate copolymer having a vinyl acetate monomer content ≥ 33%, an ethylene- vinyl acetate- carbonate copolymer, and an ethylene- vinyl alcohol copolymer;
the unsaturated monomer having a carboxyl (anhydride) group comprises at least one selected from the group consisting of (meth)acrylic acid, undecenoic acid, octadecenoic acid, crotonic acid, itaconic acid, fumaric acid, maleic anhydride, 2- ethylacrylic acid, isocrotonic acid, α- acetoxyacrylic acid, β- trans- aryloxyacrylic acid, α- chloro- β- E- methoxyacrylic acid, β- diaminoacrylic acid, maleic anhydride, acrylic anhydride, methylmaleic anhydride, dimethylmaleic anhydride, methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleate;
the unsaturated monomer having a sulfonic acid group comprises at least one selected from the group consisting of 2- acrylamido- 2- methylpropanesulfonic acid, allyloxyhydroxypropylsulfonic acid, vinylsulfonic acid, vinylsulfonate, 2- acrylamido- 2- methylpropanesulfonic acid, allylsulfonic acid, and methallylsulfonic acid;
the unsaturated monomer having an amino group comprises at least one selected from the group consisting of dimethylaminoethyl acrylate, diethylaminoethyl methacrylate, 2- (dimethylamino)ethyl methacrylate, and N- (2- aminoethyl)acrylamide;
the unsaturated monomer having a hydroxyl group comprises at least one selected from the group consisting of hydroxyethyl acrylate, hydroxypropyl acrylate, hydroxybutyl acrylate, and hydroxyethyl caprolactone acrylate;
the dispersing monomer comprises at least one selected from the group consisting of methyl (meth)acrylate, ethyl (meth)acrylate, butyl (meth)acrylate, isooctyl (meth)acrylate, glycidyl (meth)acrylate, lauryl acrylate, stearyl acrylate, phenoxyethyl (meth)acrylate, caprolactone acrylate, tetrahydrofurfuryl (meth)acrylate, ethoxylated tetrahydrofurfuryl acrylate, 2- methoxyethyl (meth)acrylate, 2- ethoxyethyl acrylate, glycidyl methacrylate, and allyl glycidyl ether.

3. The flexible binder according to claim 1, **characterized in that**: the thermoplastic resin is present in an amount of 25 to 45 parts.

4. The flexible binder according to claim 1, **characterized in that**: the thermoplastic resin has a molecular weight of 50,000 to 400,000.

5. The flexible binder according to claim 1, **characterized in that**: the modifying monomers further comprise a crosslinking monomer.

6. The flexible binder according to claim 1, **characterized in that**: the crosslinking monomer is present in an amount not exceeding 1.5% by weight of the total modified resin.

7. The flexible binder according to claim 5, **characterized in that**: the crosslinking monomer comprises at least one selected from the group consisting of ethylene glycol dimethacrylate, ethylene glycol diacrylate, allyl methacrylate, N,N- methylenebisacrylamide, and divinylbenzene.

8. The flexible binder according to claim 1, **characterized in that**: the modifying monomers consist of a functional monomer, a dispersing monomer, and a crosslinking monomer.

9. The flexible binder according to claim 8, **characterized in that**: in parts by weight: 20 to 50 parts of thermoplastic resin, 5 to 25 parts of functional monomer, 40 to 60 parts of dispersing monomer, and 0.01 to 1.5 parts of crosslinking monomer.

10. Use of the flexible binder according to any one of claims 1 to 9 in a secondary battery.
